# EUROPÄISCHE PATENTSCHRIFT

(11) **EP 2 114 176 B1**
(45) Veröffentlichungstag und Bekanntmachung des Hinweises auf die Patenterteilung: **14.05.2014**
(21) Anmeldenummer: 08701305.8
(22) Anmeldetag: 08.01.2008
(51) Int. Cl.: A23N 12/10

(54) **VORRICHTUNG UND VERFAHREN ZUR WÄRMEBEHANDLUNG EINES SCHÜTTFÄHIGEN PFLANZLICHEN GUTES**
DEVICE AND METHOD FOR HEAT-TREATING A POURABLE PLANT PRODUCT
DISPOSITIF ET PROCÉDÉ POUR LE TRAITEMENT THERMIQUE D'UN PRODUIT VÉGÉTAL EN VRAC

(30) Priorität: 08.02.2007 DE 102007006268
(43) Veröffentlichungstag der Anmeldung: 11.11.2009
(73) Patentinhaber: Probat-Werke Von Gimborn Maschinenfabrik Gmbh, 46446 Emmerich Am Rhein (DE)
(72) Erfinder: LANGE, Stephan, 47533 Kleve (DE); JANSEN, Gerhard A., 7041 JH's Heerenberg (DE)
(74) Vertreter: Von Kreisler Selting Werner - Partnerschaft von Patentanwälten und Rechtsanwälten mbB
(86) Internationale Anmeldenummer: PCT/EP2008/050135
(87) Internationale Veröffentlichungsnummer: WO 2008/095744

(56) Entgegenhaltungen:
- DE-A- 13 883
- DE-A1- 2 103 281
- DE-A1- 2 341 099
- US-A- 2 279 362
- US-A- 2 326 094

## Beschreibung

Die Erfindung betrifft eine Vorrichtung und ein Verfahren zur Wärmebehandlung eines schüttfähigen Produktes, insbesondere zum Rösten und Kühlen eines rieselfähigen pflanzlichen Guts.

Als schüttfähige pflanzliche Produkte werden Bohnen, Kerne und Samen verstanden, die sich durch Fliehkraft in eine radial-periphere Umwälzung versetzen lassen. Die Wärmebehandlung des Produktes ist eine Wärmeübertragung überwiegend durch Konvektion von strömender Heißluft. Die Wärmebehandlung erfolgt vorzugsweise mit automatisch geregelter Temperatur und automatisch geregeltem Mengenstrom. Die für die Konvektion nötige Relativgeschwindigkeit wird vorzugsweise durch die durch die Fliehkraftwirkung schnell bewegten Produktteilchen gegenüber der langsamer strömenden Heißluft hergestellt.

Nach dem Stand der Technik sind verschiedene Einrichtungen zur Wärme-, Kälte- und/oder Stoffbehandlung bekannt.

In DE 21 03 281 C3 ist eine Einrichtung zur Wärme-, Kälte- und/oder Stoffbehandlung eines körnigen rieselfähigen Guts, insbesondere zum Rösten von Kaffeebohnen oder Kakaobohnen beschrieben, bei der das Gut unter der Fliehkraftwirkung über den Rand eines Behälters hinausgefördert wird. Der Behälter hat zumindest annähernd die Form eines Rotationsparaboloids. Dabei ist oberhalb des Behälters in gegenüber den Abmessungen des Gutes geringem Abstand vom Rand des Behälters ein relativ gegensinnig zu dem Behälter umlaufender Deckel mit bogenförmigen Leitschaufeln bzw. Rippen angeordnet, die sich bis in die Nähe der Mitte des Deckels erstrecken. Der Behälter und der umlaufende Deckel sind von einem Gehäuse umgeben, das die beim Entleeren des Behälters aus dem Spalt zwischen Behälterrand und Deckel austretenden Kaffeebohnen aufnimmt.

In DE 23 41 099 C2 ist eine Einrichtung zur Wärme-, Kälte- und/oder Stoffbehandlung eines körnigen, rieselfähigen Guts, insbesondere zum Rösten von Kaffee- oder Kakaobohnen mit einem mit senkrechter Achse angeordneten sich nach unten verjüngenden Behälter, in dem das Gut einem im wesentlichen nach oben gerichteten Behandlungsstrom ausgesetzt ist, beschrieben. Das Gut wird dabei unter der Fliehkraftwirkung über den Rand des Behälters hinausgefördert und oberhalb des Behälters von bogenförmigen, leicht drallverwundenen Leitschaufeln bzw. Rippen eines gegensinnig zu dem Behälter umlaufenden Deckels umgelenkt. Der Behandlungsstrom wird dabei durch ein sich durch den Deckel hindurch in den Behälter hinein erstreckendes, koaxial zum Behälter verlaufendes Rohr zugeführt. Das Rohr ist mit seiner Umlenkkante zum Boden des Behälters einstellbar und macht damit den Behandlungsstrom steuerbar. Über das Rohr werden auch die zu röstenden Kaffeebohnen zugeführt.

Der Behandlungsstrom ist eine Mischung aus heißer Abluft und in einem Heißlufterzeuger erwärmter Frischluft, die dem oben genannten Rohr aus einer Mischstation zugeführt wird. Stromaufwärts vor der Mischstation sind eine Leitung und ein Nachbrenner angeordnet, der aus einem Brenner und einer Brennkammer besteht.

Die Lösungen nach dem Stand der Technik weisen vielfach einen großen Raumbedarf für die Zusatzeinrichtungen der Anlage, wie den Heißlufterzeuger auf. Dabei sind lange und aufwendig isolierte Rohrleitungen notwendig. Die Wärmerückgewinnung einerseits und die Prozessführung andererseits sind schwierig zu steuern und häufig nicht reproduzierbar durchzuführen. Bei einer Veränderung der Masse des schüttfähigen Produktes kann die Umwälzbewegung nur in begrenztem Umfang optimiert werden.

US 2,326,094 beschreibt eine Kaffeeröstvorrichtung mit einer Röstkammer, in der ein elektrisches Heizelement angeordnet ist, das Strahlungswärme abgibt. Im unteren Teil der Röstkammer ist eine Rotorschale angeordnet.

US 2,279,362 beschreibt eine Vorrichtung, beispielsweise zum Rösten von Kakaobohnen. Es ist eine Rösttrommel vorgesehen, die um eine horizontal verlaufende Achse rotierbar ist. Durch die Rösttrommel wird Heißluft geführt. Der Heißlufterzeuger ist hierbei seitlich neben der Rösttrommel angeordnet.

Der Erfindung liegt die Aufgabe zugrunde, eine Vorrichtung zur Wärmebehandlung eines schüttfähigen pflanzlichen Produktes zu schaffen, die sehr kompakt gebaut werden kann. Ferner liegt der Erfindung die Aufgabe zugrunde, ein Verfahren zum Betreiben einer Vorrichtung zur Wärmebehandlung eines schüttfähigen pflanzlichen Produkts effektiver zu gestalten

Die Lösung der Aufgabe erfolgt erfindungsgemäß durch eine Vorrichtung gemäß Anspruch 1 bzw. ein Verfahren gemäß Anspruch 9.

Als zu behandelnde Produkte im Sinne der Erfindung werden grundsätzlich alle schüttfähigen und rieselfähigen pflanzlichen Produkte verstanden. Zur Vereinfachung der weiteren Darstellung der Erfindung wird als Wärmebehandlung eines Produktes im Folgenden das Rösten und Kühlen von Kaffeebohnen, die in die Vorrichtung eingebracht werden, verstanden.

Die erfindungsgemäße Vorrichtung zur Wärmebehandlung eines schüttfähigen pflanzlichen Gutes, die insbesondere zum Rösten von Kaffeebohnen geeignet ist, weist einen Röstbehälter auf, in den die Kaffeebohnen eingebracht werden. Der Röstbehälter umfasst eine Rotorschale und eine Deckeleinrichtung. Die Rotorschale und/ oder die Deckeleinrichtung sind mit einer Antriebseinrichtung zum Drehen der Rotorschale relativ zur Deckeleinrichtung verbunden. Vorzugsweise erfolgt ein Drehen der Rotorschale, wobei die Deckeleinrichtung insbesondere stationär ist. Die Drehung erfolgt hierbei um eine vertikale Achse. Durch Drehen der Rotorschale wirken auf die Kaffeebohnen Fliehkräfte, so dass diese in der Schale entlang der Innenwand der Schale nach oben in Richtung einer Deckelinnenseite eines Deckels der Deckeleinrichtung gefördert werden. Von dem Deckel, der vorzugsweise im Wesentlichen radial verlaufende, ggf. gekrümmte Leitbleche aufweist, werden die Bohnen in Richtung der Rotationsachse nach innen zurück gefördert und gelangen somit wieder in einen unteren bzw. Bodenbereich der Rotorschale. Ferner weist die erfindungsgemäße Vorrichtung einen Heißlufterzeuger zum Erwärmen von zugeführter Luft auf. Der Heißlufterzeuger ist über ein Zuführrohr mit dem Röstbehälter verbunden. Erfindungsgemäß ist der Heißlufterzeuger sowie der Zuführkanal Bestandteil der vorzugsweise stationären Deckeleinrichtung. Hierdurch ist eine äußerst kompakte Bauweise möglich. Es ist somit nicht erforderlich, lange, insbesondere zu isolierende Rohrleitungen, vorzusehen, die den Heißlufterzeuger mit dem Röstbehälter verbinden. Hierdurch ist nicht nur eine kompakte Bauweise sondern auch eine kostengünstige Ausgestaltung der erfindungsgemäßen Rösteinrichtung möglich.

Durch die neuartige Anordnung und Ausbildung des Heißlufterzeugers wird einerseits eine besonders kompakte Bauweise der Vorrichtung realisiert und andererseits wird der Wärmeverlust minimiert und die Wärmerückgewinnung wird verbessert. Es erweist sich als sehr vorteilhaft, dass die erfindungsgemäße Vorrichtung beim Start jeweils nach einer besonders kurzen Aufheizzeit in Betrieb genommen werden kann. Die Temperatur- und Mengenregelung der Heißluft wird nicht nachteilig durch unterschiedlich lange Zuführleitungen beeinflusst, wie sie nach dem Stand der Technik verwendet werden.

Der Heißlufterzeuger ist oberhalb der Rotorschale angeordnet. Das Gewicht des Heißlufterzeugers wird hierbei von der Deckeleinrichtung getragen. Hierbei ist es besonders bevorzugt, den Heißlufterzeuger symmetrisch zur Rotationsachse der Rotorschale vorzusehen. Hierbei ist es bevorzugt, den Zuführkanal zumindest im Bereich einer Deckelöffnung, durch die die Heißluft in den Röstbehälter eintritt, vertikal anzuordnen. Besonders bevorzugt ist es, dass der Zuführkanal zwischen dem Heißlufterzeuger und dem Röstbehälter vollständig vertikal verläuft. Hierbei erfolgt das Zuführen der Heißluft über einen vorzugsweise mittig bezogen auf den Röstbehälter angeordneten Zuführkanal. Die Rotorachse, d.h. die Drehachse der Rotorschale ist somit achssymmetrisch zu der Mittelachse des vorzugsweise kreiszylindrischen Zuführkanals, so dass die beiden Achsen identisch sind.

Vorzugsweise weist die erfindungsgemäße Rösteinrichtung ferner mindestens einen Zusatzkanal auf. Den mindestens einen Zusatzkanal umgibt vorzugsweise den Zuführkanal, wobei der mindestens eine Zusatzkanal sodann kreisringförmig ausgebildet sein kann. Durch den mindestens einen Zusatzkanal werden vorzugsweise Abluftströme, d.h. aus dem Röstbehälter abgeführte Luft geleitet.

Bei einer besonders bevorzugten Ausführungsform der erfindungsgemäßen Rösteinrichtung ist zusätzlich eine Rezirkulationseinrichtung vorgesehen. Mit Hilfe der Rezirkulationseinrichtung werden Teilströme der Abluft erneut dem Röstbehälter zugeführt. Hierzu ist die Rezirkulationseinrichtung mit dem mindestens einen Zusatzkanal bzw. den Zusatzkanälen verbunden. Zur Regelung des Volumens eines dem Röstprozess erneut zugeführten Prozessabluftstroms weist die Rezirkulationseinrichtung vorzugsweise mehrere Regeleinrichtungen, bei denen es sich insbesondere um regelbare Klappen handelt, auf. Hierdurch ist es möglich, den Prozessabluftstrom in zwei oder mehrere Teilströme aufzuteilen. Vorteilhaft ist hierbei insbesondere, dass die Prozessabluftströme zur Isolation und zum Wärmeaustausch durch Zusatzkanäle geleitet werden, die den Zuführkanal zumindest teilweise umgeben. Vorzugsweise ist die Regeleinrichtung der Rezirkulationseinrichtung im Eintrittsstutzen des Heißlufterzeugers angeordnet.

Der Deckel der Deckeleinrichtung weist vorzugsweise an einer Innenseite mehrere, insbesondere radial verlaufende Leitschaufeln auf, die vorzugsweise gekrümmt sind. Durch die Leitschaufeln werden die auf Grund der Fliehkraft an der Innenseite der Rotorschale nach oben geförderten Kaffeebohnen wieder nach innen in Richtung der Rotationsachse gelenkt und fallen in die Rotorschale zurück. Um ein möglichst schonendes Rösten der Kaffeebohnen ermöglichen zu können, sind die Leitschaufeln vorzugsweise gekrümmt ausgebildet.

Vorzugsweise ist in dem Röstbehälter ein beispielsweise mit der Deckeleinrichtung verbundener Formkörper vorgesehen. Der Formkörper ist vorzugsweise im Kopfraum, d.h. im oberen Bereich des Röstbehälters angeordnet. Bei dem Formkörper handelt es sich vorzugsweise um einen Blechformkörper. Der Formkörper ist vorzugsweise derart ausgebildet, dass eine Unterseite des Formkörpers in Richtung der Rotationsachse nach innen geneigt ist, so dass durch den Formkörper von den Leitschaufeln nach innen geförderte Kaffeebohnen nach unten in die Rotorschale abgelenkt werden. Ferner ist der Formkörper vorzugsweise derart ausgebildet, dass zwischen dem Formkörper und einer Deckelinnenseite ein Abstand vorgesehen ist. Hierdurch ist ein Abluftkanal ausgebildet, durch den aus dem Röstbehälter Abluft in einen der Zusatzkanäle geleitet werden kann. Hierbei weist der Abluftkanal bzw. der zwischen der Deckelinnenseite und dem Formkörper ausgebildete Spalt vorzugsweise einen ringförmigen Querschnitt auf, der insbesondere in Richtung des Zusatzkanals kegelstumpfförmig zu läuft.

Ein insbesondere oberhalb des Deckels ggf. seitlich neben dem Zuführkanal angeordnetes Einfüllrohr ist mit dem Röstbehälter verbunden. Das Einfüllrohr ist vorzugsweise durch den Formkörper hindurch geführt. Das Einfüllrohr weist vorzugsweise einen Schieber auf, dem in Einführrichtung ein Vorlagebehälter vorgeordnet ist. Über den Vorlagebehälter können durch Betätigen des Schiebers Kaffeebohnen chargenweise dem Röstbehälter zugeführt werden. Die Zufuhr erfolgt hierbei insbesondere durch Schwerkraft.

Ferner weist der Röstbehälter eine Auslassöffnung auf, die vorzugsweise in der Deckeleinrichtung angeordnet ist. Insbesondere ist die Auslassöffnung im Bereich der Leitschaufeln, d.h. in einem äußeren Bereich des Deckels, angeordnet. Die Auslassöffnung weist vorzugsweise einen insbesondere nach oben entfernbaren Verschluss, der insbesondere kreisabschnittförmig ausgebildet ist, auf. An diesem können eine oder mehrere Leitschaufeln befestigt sein. Somit ist es möglich, durch ein einfaches Öffnen der Auslassöffnung und ein hierdurch erfolgendes Entfernen von einer oder mehreren Leitschaufeln Röstbohnen aus dem Röstbehälter zu entnehmen. Hierbei erfolgt ein Herausfördern der Kaffeebohnen aus dem Röstbehälter auf Grund der auf die Kaffeebohnen wirkenden Fliehkräfte. Die aus dem Röstbehälter geförderten Kaffeebohnen werden einer Kühleinrichtung, wie einem Wirbelbettkühler, zugeführt.

Die erfindungsgemäße Vorrichtung zur Wärmebehandlung eines schüttfähigen pflanzlichen Gutes, die eine selbständige Erfindung darstellt, weist eine mehrteilige Rotorschale auf. Insbesondere weist die Rotorschale eine doppelwandige Außenschale auf, die zwischen zwei vorzugsweise kegelstumpfförmigen' Wänden aus Blech mit einem insbesondere mineralischen Isolierstoff gefüllt ist. Das hat den Vorteil, dass ein zwischen der Rotorschale und der stationären Deckeleinrichtung vorhandener Ringspalt relativ klein ausgebildet sein kann. Hierdurch ist vermieden, dass durch den Ringspalt Kaffeebohnen geschleudert werden.

Von oben in die Außenschale ist vorzugsweise eine einwandige, vorzugsweise aus Blech hergestellte Innenschale eingesetzt und verschraubt. Hierdurch ist s möglich, auf einfache Weise die Innenschale auszuwechseln und beispielsweise durch eine Schale mit anderer Innenkontur zu ersetzen. Dadurch ist es möglich, beispielsweise die Neigungen der Innenschale an den Durchmesser anzupassen.

Ferner kann die Oberflächenbeschaffenheit der Innenschale derart gewählt werden, dass diese auf die spezifische Masse der Einzelpartikel des schüttfähigen Produktes abgestimmt ist. Auch kann durch die Wahl der Form der Innenschale eine gute Anpassung an die Drehzahl der Rotorschale erfolgen.

Die erfindungsgemäße Vorrichtung ist vorzugsweise als Chargenanlage konzipiert und beinhaltet im Wesentlichen neben dem Röstbehälter, in dem die Wärmebehandlung stattfindet, einen Wirbelbettkühler zum abrupten Kühlen des Produkts mit kalter Luft, unmittelbar nach der Wärmebehandlung.

In dieser Weiterbildung der Erfindung kann die mehrwandige Schale des Rotors für unterschiedliche Kaffeebohnensorten mit unterschiedlich geformten Innenschalen bestückt werden. Die Rohkaffeebohnen sowie letztendlich die fertigen Röstkaffeebohnen werden kaffeespezifisch in eine bestmögliche Umwälzbewegung versetzt.

Die praktisch vorteilhaften Neigungen der Innenschale am jeweiligen Durchmesser werden jeweils durch die Masse der Kaffeebohnen bzw. schüttfähigen Produkte in Verbindung mit der Drehzahl des Rotors bestimmt. Die Vorrichtung kann damit vorteilhaft für die wahlweise Wärmebehandlung hinsichtlich der Masse sehr unterschiedlicher schüttfähiger Produkte eingesetzt werden.

Ferner betrifft die Erfindung ein Verfahren zum Betreiben einer vorstehenden Vorrichtung zur Wärmebehandlung eines schüttfähigen pflanzlichen Gutes, bei dem es sich insbesondere um ein Rösten von Kaffeebohnen handelt. Das erfindungsgemäße Verfahren dient zum Betreiben der vorstehend beschriebenen erfindungsgemäßen Vorrichtung. Dabei erfolgt während des Betriebs ein Zirkulieren des Heißluftstroms durch einen Röstbehälter, insbesondere unter Zwischenschalten eines Feststoffabscheiders. Hierbei wird dem Heißluftstrom ein über einen Heißlufterzeuger erzeugter Zuluftstrom zugeführt. Erfindungsgemäß wird während des Betriebs ein Mengenstrom Heißluft mit im Wesentlichen gleichbleibender Größe im Kreislauf gefördert. Das Fördern erfolgt hierbei vorzugsweise über einen Feststoffabscheider, wie einen Zyklon. Zum Fördern des Heißluftstroms ist insbesondere ein Ventilator vorgesehen. Gleichzeitig wird die Röstluft vorzugsweise derart in der Menge geregelt, dass entsprechend den technologischen Erfordernissen aus dem Heißlufterzeuger in den Röstbehälter die Luft zugeführt wird.

Besonders bevorzugt ist es, in der ersten Prozessphase, in der die Kaffeebohnen im Röstbehälter getrocknet werden, die Volumina der Teilströme in Abhängigkeit eines Drucks im Röstbehälter insbesondere automatisch zu regeln. Bei der daran anschließenden Röstung der Kaffeebohnen mit Heißluft können die chemischen Umwandlungen in den Kaffeebohnen und damit die Bildung der Aroma- und Geschmacksstoffe gezielt gesteuert werden. Dazu ist es notwendig, dass bei einer vorbestimmten Röstzeit sowohl der zeitliche Verlauf des Wärmeflusses in das Innere der Kaffeebohnen als auch der zeitliche Verlauf der Kaffeebohnentemperatur an der Oberfläche exakt nach vorgegebenen Kurvenprofilen gesteuert werden.

In der Röstphase verändert sich der Wärmefluss in das Innere der Kaffeebohnen im Wesentlichen einerseits in Abhängigkeit von der Temperaturdifferenz zwischen der Heißluft und den Kaffeebohnen und andererseits abhängig vom Wärmeübergangskoeffizienten an der Kaffeebohnenoberfläche. Dieser Wärmeübergangskoeffizient ändert sich bei unterschiedlichen Strömungsgeschwindigkeiten der Heißluft entlang den Oberflächen der Kaffeebohnen. Daher werden bei einer besonders bevorzugten Weiterbildung des Verfahrens in der Röstphase mit einer programmierten Steuerung sowohl der zeitliche Verlauf der Temperatur der in den Röstbehälter einströmenden Heißluft, als auch der Mengenstrom dieser Heißluft nach Soll-Verlaufskurven gesteuert.

Erfindungsgemäß erfolgt eine Aufteilung des relativ konstanten Heißluftstroms, den der Ventilator fördert, in mindestens drei Teilströme. Ein erster Teilstrom zirkuliert vollständig, d.h. in den Heißlufterzeuger, wo er sich durch Vermischen mit den Brennerabgasen im direkten Wärmeaustausch erwärmt und dann in den Röstbehälter gelangt. Ein zweiter Teilstrom wird durch einen Zusatzkanal geführt, wo er sich indirekt an der Wand des Zusatzkanals erwärmt und danach durch eine Abgasreinigung ins Freie abgeführt wird. Der dritte Teilstrom wird nicht in den Heißlufterzeuger und nicht in den Röstbehälter, sondern als Beipassstrom an beiden vorbei unmittelbar dem Feststoffabscheider, wie dem Zyklon, zugeführt.

Mit Hilfe der erfindungsgemäßen Vorrichtung sowie des erfindungsgemäßen Verfahrens, das insbesondere zum Betreiben der Vorrichtung eingesetzt wird, ist es somit möglich, bei verringertem technischen Aufwand eine hohe Produktivität zu erzielen. Ein weiterer Vorteil der Erfindung besteht darin, dass eine verbesserte vollautomatisierte Prozessführung bei hoher Wärmerückgewinnung um hohe Verfügbarkeit möglich ist.

Die Erfindung wird im Folgenden anhand einer Zeichnung näher erläutert. Als Ausführungsbeispiel ist eine Kaffeeröstmaschine mit angebautem Wirbelbettkühler dargestellt.

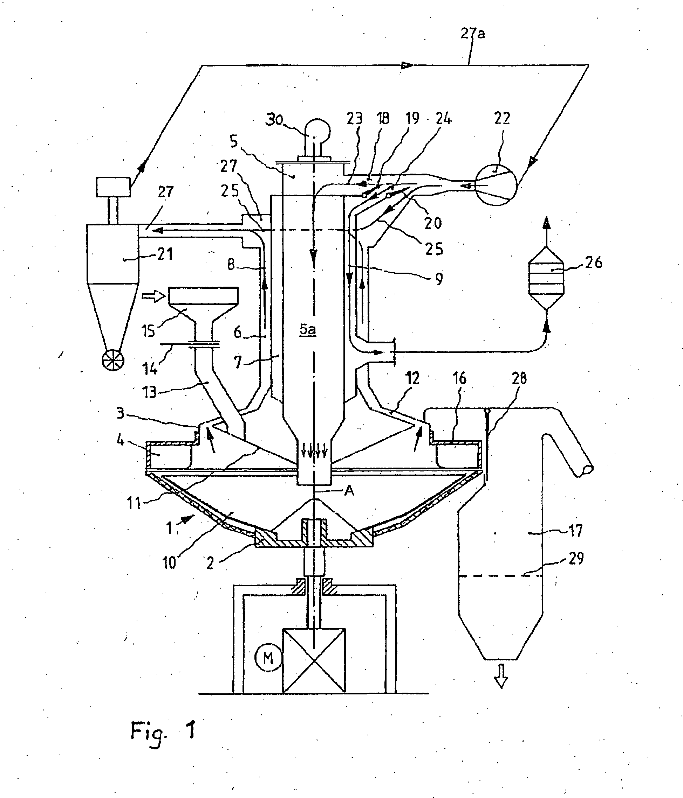

Fig. 1 zeigt eine schematische Schnittdarstellung.

Die erfindungsgemäße Vorrichtung weist einen Röstbehälter 1, mit einem unteren Rotor 2, der motorisch mittels eines Motors M angetrieben ist und sich um seine vertikale Achse A dreht, auf. Der Rotor 2 hat die Form einer Rotorschale und weist eine leicht austauschbare Innenschale 10 auf. Der Antrieb des Rotors 2 erfolgt mit solcher Geschwindigkeit, dass in der Innenschale 10 enthaltene Kaffeebohnen unter der Fliehkraftwirkung über den Rand der Rotorschale 2 hinaus gefördert werden. Oberhalb des Rotors 2 ist eine feststehende Deckeleinrichtung 3 angeordnet, deren Unterkante während des Betriebs nur einen geringen Abstand zur Oberkante der Rotorschale 2 aufweist. Die Deckeieinrichtung 3 trägt in einem äußeren Ringbereich auf ihrer Unterseite Leitschaufeln 4, die so geformt sind, dass die Kaffeebohnen schlag- und stoßfrei an den inneren Oberflächen entlang gleiten und dabei in zentrische Richtung, d.h. nach innen umlenken werden.

Die Deckeleinrichtung 3 bildet erfindungsgemäß vorzugsweise mit dem Heißlufterzeuger 5 eine Einheit zum oberen Abschluss des Röstbehälters 1. Aus dem Heißlufterzeuger 5 wird senkrecht nach unten die Heißluft symmetrisch in den Röstbehälter 1 eingeblasen. Nach der Wärmeübertragung von der Heißluft an die Kaffeebohnen wird die Prozessabluft durch den Zusatzkanal 12 abgeführt. Den Zusatzkanal 12 begrenzt auf einer Seite ein Blechformkörper 11 und auf der anderen Seite der Außenmantel der Deckeleinrichtung 3. Der Prozessabluftstrom 8 gelangt sodann durch den Kanal 6 in den Umgehungskanal 27. Dort vermischt sich der Prozessabluftstrom 8 mit dem Teilstrom 25. Die beiden vereinigten Abluftströme gelangen in einen Feststoffabscheider, wie einen Zyklon 21. Im Zyklon 21 werden die Feststoffanteile aus der Abluft abgeschieden. Der Ventilator 22 saugt die so gereinigte Luft an und fördert sie zum Eintrittstutzen 18 weiter. Im Eintrittstutzen 18 sind Leitbleche und Regelklappen 19, 20 so angeordnet, dass der eintretende Luftstrom sich in drei Teilströme verzweigt. Der erste Teilstrom 23 gelangt in das Innere des Heißlufterzeugers 5 und wird dort im direkten Wärmeaustausch von der Gasflamme des Gebläsebrenners 30 mit einer an sich bekannten Temperaturregeleinrichtung automatisch geregelt auf das Temperaturniveau der Röstzuluft gebracht. Die Regelklappe 19 reguliert automatisch, abhängig vom Absolutdruck im Röstbehälter 1 den freien Querschnitt für den Überschussvolumenstrom 9. Dieser strömt in den konzentrisch um den Heißlufterzeuger 5 ausgebildeten Kanal 7 und heizt sich durch indirekte Wärmeaufnahme an der Wand des Heißlufterzeugers 5 auf. Der Überschussvolumenstrom 9 wird danach durch die Abgasreinigungsanlage 26 geführt, wo die in der Abluft enthaltenen gasförmigen organischen Stoffe verbrannt werden. Die Verbrennung kann grundsätzlich katalytisch, thermisch oder flammenlos regenerativ sein. In jedem Fall erweist es sich als sehr vorteilhaft, dass vor der Verbrennung der Überschussvolumenstrom 9 im Kanal 7 auf ein höheres Temperaturniveau aufgeheizt wird. Die Abluft aus der Abgasreinigungsanlage 26 erfüllt nach der Verbrennung der gasförmigen organischen Stoffe die Emissionsanforderungen und wird ins Freie abgelassen.

Die Regelklappe 20 reguliert automatisch abhängig von einer variablen Führungsgröße für den Prozessluft-Mengenstrom die Größe des Teilstroms 25. Der Teilstrom 25 wird zum Umgehungskanal 27 geführt und bleibt damit im Heißluftkreislauf, ohne jedoch den Heißlufterzeuger 5 und den Röstbehälter 1 zu passieren.

Für die Feststoffabscheidung im Zyklon 21 und für die Heißluftförderung des Ventilators 22 ist es vorteilhaft, dass deren Mengenstrom als Summe der Teilströme 8 und 25 immer relativ konstant bleibt, während gleichzeitig die einzelnen Teilströme 23, 24 und 25, die in der Summe 100% des Kreislauf-Mengenstroms bilden, den Prozesserfordernissen entsprechend, in weiten Bereichen geregelt werden können.

Die Zuführung der zu röstenden Kaffeebohnen in den Röstbehälter 1 erfolgt durch Schwerkraft aus dem Vorlagebehälter 15 durch einen absperrbaren Schieber 14 und durch ein Einlaufrohr 13, welches durch den Blechformkörper 11 geführt ist. Als vorteilhaft hat es sich erwiesen, wenn die Kaffeebohnen außerhalb des Zentrums, im inneren Drittel der drehenden Innenschale 10 auftreffen. Die Kaffeebohnen werden unmittelbar nach dem Auftreffen auf die Innenschale 10 in eine radial-tangentiale Bewegungsrichtung und danach im äußeren Innenschalenabschnitt zunehmend in eine vertikal-tangentiale Bewegungsrichtung versetzt. Die Drehzahl des Rotors 2 wird so gewählt, dass die Kaffeebohnen durch die kinetische Energie über den oberen Rand des Rotors 2 hinaus bis in die Leitschaufeln 4 der Deckeleinrichtung 3 bewegt werden. Im Wirkbereich der Leitschaufeln 4 gleiten die Kaffeebohnen stoßfrei an der inneren Oberfläche der Leitschaufeln 4 entlang und werden dabei im Wesentlichen von der vertikal-tangentialen Bewegungsrichtung in eine zentrische Richtung umgelenkt. Nach dem Verlassen der Leitschaufeln 4 fliegen die Kaffeebohnen wieder in die Innenschale 10 und der Kreislauf einer gleichmäßigen, intensiven Umwälzung der Kaffeebohnen beginnt erneut, wobei die Heißluft die Kaffeebohnen gleichzeitig und allseitig umströmt.

In der Deckeleinrichtung 3 befindet sich eine Ausschleusungsöffnung, die in der Verfahrensphase Rösten durch den anhebbaren Kreisabschnitt 16 kanten- und spaltfrei verschlossen ist. Zur Entleerung der fertig gerösteten Charge Kaffeebohnen wird der anhebbarer Kreisabschnitt 16 mittels nicht dargestellter pneumatischer oder hydraulischer Zylinder senkrecht nach oben gefahren. Wie am übrigen Umfang der Deckeleinrichtung 3 sind auch an dem Kreisabschnitt 16 Leitschaufeln 4 befestigt. Die im Rotor 2 auf Grund der Fliehkraft hoch geförderten Kaffeebohnen treten bei angehobenem Kreisabschnitt 16, von dessen Leitschaufeln 4 gelenkt, aus dem Röstbehälter 1 aus. Die Klappe 28 öffnet sich und lässt die Kaffeebohnen auf den Siebboden 29 des Wirbelbettkühlers 17 gleiten. Danach erfolgt in an sich bekannter Weise die Kühlung der Kaffeebohnen mit durchgeblasener kalter Luft.

Wie sich insbesondere aus der Zeichnung ergibt, ist der Heißlufterzeuger 5 sowie der durch ein zylindrisches Rohr gebildete Zuführkanal 5a, der zwischen dem Heißlufterzeuger 5 und dem Röstbehälter 1 angeordnet ist, Bestandteil der Deckeleinrichtung 3.

## Patentansprüche

1. Vorrichtung zur Wärmebehandlung eines schüttfähigen pflanzlichen Produkts, insbesondere zum Rösten von Kaffeebohnen, mit
einem von einer Rotorschale (2) und einer Deckeleinrichtung (3) gebildeten Röstbehälter (1),
einer Antriebseinrichtung (M) zum Drehen der Rotorschale (2) relativ zur Deckeleinrichtung (3) um eine Achse (A), und
einem über einen Zuführkanal (5a) mit dem Röstbehälter (1) verbundenen Heißlufterzeuger (5),
**dadurch gekennzeichnet, dass**
der Heißlufterzeuger (5) sowie der Zuführkanal (5a) Bestandteil der Deckeleinrichtung (3) sind und
der Heißlufterzeuger (5) oberhalb der Rotorschale (2) angeordnet ist.

2. Vorrichtung nach Anspruch 1, **dadurch gekennzeichnet, dass** die Deckeleinrichtung (3) stationär ist und/ oder die Achse vertikal ist.

3. Vorrichtung nach einem der Ansprüche 1 - 2, **dadurch gekennzeichnet, dass** der Zuführkanal (5a) zumindest im Bereich einer Deckelöffnung, durch die die Heißluft in den Röstbehälter (1) eintritt, vertikal angeordnet ist.

4. Vorrichtung nach einem der Ansprüche 1 - 3, **dadurch gekennzeichnet, dass** der Zuführkanal (5a) mittig, insbesondere achssymmetrisch zur Rotorachse (A) der Rotorschale (2) angeordnet ist.

5. Vorrichtung nach einem der Ansprüche 1 - 4, **gekennzeichnet durch** mindestens einen den Zuführkanal (5a) umgebenden Zusatzkanal (6, 7), **durch** den bzw. die insbesondere Abluftströme geleitet werden.

6. Vorrichtung nach Anspruch 5, **dadurch gekennzeichnet, dass** der mindestens eine Zusatzkanal (6, 7) den Zuführkanal (5a) ringförmig umgibt.

7. Vorrichtung nach einem der Ansprüche 1 - 6, **dadurch gekennzeichnet, dass** die Deckeleinrichtung (3) eine Auslassöffnung aufweist, die insbesondere im Bereich der Leitschaufeln (4) angeordnet ist.

8. Vorrichtung nach Anspruch 7, **dadurch gekennzeichnet, dass** die Auslassöffnung über einen Auslasskanal mit einer Kühleinrichtung, insbesondere einem Wirbelbettkühler (17), verbunden ist.

9. Verfahren zum Betreiben einer Vorrichtung zur Wärmebehandlung eines schüttfähigen pflanzlichen Produkts, insbesondere zum Rösten von Kaffeebohnen, nach einem der Ansprüche 1 - 8, bei welchem während des Betriebs ein Heißluftstrom zirkulierend durch einen Röstbehälter (1) unter Zwischenschaltung eines Feststoffabscheiders (21) geleitet wird, bei welchem der Heißluftstrom in Teilströme (23, 24, 25) aufgeteilt wird, wobei ein erster Teilstrom (23) zirkuliert, d.h. dem Röstbehälter (1) wieder zugeführt wird.

10. Verfahren nach Anspruch 9, bei welchem der Heißluftstrom zirkulierend durch den Röstbehälter unter Zwischenschaltung eines Feststoffabscheiders geleitet wird.

11. Verfahren nach Anspruch 9 oder 10, **dadurch gekennzeichnet, dass** der erste Teilstrom (23) dem Heißlufterzeuger (5) zugeführt wird.

12. Verfahren nach einem der Ansprüche 9 - 11, **dadurch gekennzeichnet, dass** der zweite Teilstrom (24) über eine Abgasreinigungseinrichtung (26) abgeführt wird.

13. Verfahren nach einem der Ansprüche 9 - 12, **dadurch gekennzeichnet, dass** der dritte Teilstrom (25) hinsichtlich des Heißlufterzeugers (5) und des Röstbehälters (1) als Beipassstrom unmittelbar dem Feststoffabscheider (21) zugeführt wird.

14. Verfahren nach einem der Ansprüche 9 - 13, bei welchem die Volumina der Teilströme (23, 24, 25) in Abhängigkeit eines Drucks im Röstbehälter (1) insbesondere automatisch geregelt werden.

## Claims

1. A device for heat-treating a pourable plant product, in particular for roasting coffee beans, said device comprising
a roasting vessel (1) formed by a rotor bowl (2) and a lid device (3),
a drive means (M) for rotating the rotor bowl (2) relative to the lid device (3) about an axis (A), and
a hot air generator (5) connected to the roasting vessel (1) via a feed channel (5a),
**characterized in that**
the hot air generator (5) and the feed channel (5a) are components of the lid device (3) and
the hot-air generator (5) is arranged above the rotor bowl (2).

2. The device according to claim 1, **characterized in that** the lid device (3) is stationary and/or said axis is vertical.

3. The device according to any one of claims 1 - 2, **characterized in that** the feed channel (5a) is arranged vertically at least in the region of a lid opening provided for passage of the hot air into the roasting vessel (1).

4. The device according to any one of claims 1 - 3, **characterized in that** the feed channel (5a) is arranged centrally, particularly with axial symmetry, relative to the rotor axis (A) of the rotor bowl (2).

5. The device according to any one of claims 1 - 4, **characterized by** at least one additional channel (6, 7) surrounding the feed channel (5a) and provided particularly to conduct exhaust air flows.

6. The device according to claim 5, **characterized in that** said at least one additional channel (6, 7) surrounds the feed channel (5a) in a circular configuration.

7. The device according to any one of claims 1 - 6, **characterized in that** the lid device (3) is provided with an exit opening arranged particularly in the region of the guide blades (4).

8. The device according to claim 7, **characterized in that** said exit opening is connected via an outlet channel to a cooling device, particularly a cooler (17) with turbulent fluidized bed.

9. A method for operating a device for heat-treating a pourable plant product, in particular for roasting coffee beans, according to any one of claims 1 - 8, wherein, during operation, a hot air flow is conducted to circulate through a roasting vessel (1) with interposition of a particle separator (21), said hot air flow is subdivided into partial flows (23, 24, 25) and a first partial flow (23) is caused to circulate, i.e. is returned to the roasting vessel (1).

10. The method according to claim 9, wherein the hot air flow is conducted to circulate through the roasting vessel with interposition of a particle separator.

11. The method according to claim 9 or 10, **characterized in that** said first partial flow (23) is supplied to the hot-air generator (5).

12. The method according to any one of claims 9 - 11, **characterized in that** said second partial flow (24) is discharged via an exhaust gas cleaning system (26).

13. The method according to any one of claims 9 - 12, **characterized in that**, with respect to the hot-air generator (5) and the roasting vessel (1), the third partial flow (25) is supplied as a bypass flow directly to the particle separator (21).

14. The method according to any one of claims 9 - 13 wherein the volumes of the partial flows (23, 24, 25) are controlled, preferably automatically, in dependence on a pressure in the roasting vessel (1).

## Revendications

1. Dispositif de traitement thermique d'un produit végétal en vrac, en particulier pour la torréfaction de grains de café, comprenant
une cuve de torréfaction (1) formée d'une coque de rotor (2) et d'un système de couvercle (3),
un dispositif d'entraînement (M) pour mettre en rotation la coque de rotor (2) par rapport au système de couvercle (3) autour d'un axe (A), et
un générateur d'air chaud (5) relié à la cuve de torréfaction (1) par un canal d'amenée (5a),
**caractérisé en ce que**
le générateur d'air chaud (5) ainsi que le canal d'amenée (5a) forment des parties constitutives du système de couvercle (3), et
le générateur d'air chaud (5) est disposé au-dessus de la coque de rotor (2).

2. Dispositif selon la revendication 1, **caractérisé en ce que** le système de couvercle (3) est fixe et/ou l'axe est vertical.

3. Dispositif selon l'une des revendications 1 - 2, **caractérisé en ce que** le canal d'amenée (5a) est disposé verticalement, au moins dans la région d'une ouverture du couvercle à travers laquelle l'air chaud pénètre dans la cuve de torréfaction (1).

4. Dispositif selon l'une des revendications 1 à 3, **caractérisé en ce que** le canal d'amenée (5a) est disposé de manière centrée, en particulier axisymétrique, par rapport à l'axe (A) de la coque de rotor (2).

5. Dispositif selon l'une des revendications 1 à 4, **caractérisé par** au moins un canal supplémentaire (6, 7) entourant le canal d'amenée (5a), à travers lequel ou lesquels sont acheminés en particulier des flux d'air de sortie.

6. Dispositif selon la revendication 5, **caractérisé en ce que** ledit canal supplémentaire (6, 7), au moins au nombre de un, entoure le canal d'amenée (5a) de façon annulaire.

7. Dispositif selon l'une des revendications 1 à 6, **caractérisé en ce que** le système de couvercle (3) présente une ouverture de sortie disposée en particulier dans la région des aubes directrices (4).

8. Dispositif selon la revendication 7, **caractérisé en ce que** l'ouverture de sortie est reliée par un canal de sortie à un dispositif de refroidissement, en particulier un refroidisseur à lit fluidisé (17).

9. Procédé pour faire fonctionner un dispositif destiné au traitement thermique d'un produit végétal en vrac, en particulier à la torréfaction de grains de café, selon l'une des revendications 1 à 8, dans lequel, en cours de fonctionnement, un flux d'air chaud est acheminé par circulation à travers une cuve de torréfaction (1) par l'intermédiaire d'un séparateur de solides (21) dans lequel le flux d'air chaud est divisé en flux partiels (23, 24, 25), un premier flux partiel (23) étant recirculé, c.-à-d. ré-acheminé à la cuve de torréfaction (1).

10. Dispositif selon la revendication 9, dans lequel le flux d'air chaud est acheminé par circulation à travers la cuve de torréfaction par l'intermédiaire d'un séparateur de solides.

11. Procédé selon la revendication 9 ou 10, **caractérisé en ce que** le premier flux partiel (23) est amené au générateur d'air chaud (5).

12. Procédé selon l'une des revendications 9 à 11, **caractérisé en ce que** le second flux partiel (24) est évacué via un dispositif d'épuration des fumées (26).

13. Procédé selon l'une des revendications 9 à 12, **caractérisé en ce que** le troisième flux partiel (25) est amené directement au séparateur de solides (21) en tant que flux de dérivation par rapport au générateur d'air chaud (5) et à la cuve de torréfaction (1).

14. Procédé selon l'une des revendications 9 à 13, **caractérisé en ce que** les volumes des flux partiels (23, 24, 25) sont régulés en particulier automatiquement en fonction d'une pression dans la cuve de torréfaction (1).
